Europäisches Patentamt

**European Patent Office**

Office européen des brevets

(19)

(11) Publication number: **0 240 321**
B1

(12)

# EUROPEAN PATENT SPECIFICATION

(45) Date of publication of the patent specification:
23.05.90

(21) Application number: **87302808.8**

(22) Date of filing: **31.03.87**

(51) Int. Cl.⁵: **C08F 4/64, C08F 10/00**

(54) Catalyst components for alpha olephine-polymerizing catalysts and procedure for manufacturing same.

(30) Priority: **01.04.86  FI 861386**

(43) Date of publication of application:
**07.10.87 Bulletin 87/41**

(45) Publication of the grant of the patent:
**23.05.90 Bulletin 90/21**

(84) Designated Contracting States:
**AT BE CH DE ES FR GB GR IT LI LU NL SE**

(56) References cited:
**GB-A- 1 554 110**
**US-A- 4 195 070**
**US-A- 4 421 674**

(73) Proprietor: **NESTE OY, Keilaniemi,**
**SF-02150 Espoo 15(FI)**

(72) Inventor: **Garoff, Thomas, Borgstr.grand 4 K,**
**SF-00840 Helsinki(FI)**

(74) Representative: **Lamb, John Baxter et al, MARKS &**
**CLERK 57/60 Lincoln's Inn Fields, London**
**WC2A 3LS(GB)**

ACTORUM AG

**Description**

The invention concerns catalyst components for alpha olephine-polymerizing catalysts which consist of an organoaluminium compound, an electron donor and a solid catalyst component which has been obtained when a compound containing magnesium has reacted with a titanium halogen compound. The invention also concerns a procedure for manufacturing these catalysts components and a procedure for polymerizing alpha olephines, in particular propylene, making use of said catalyst components.

For polymerizing alpha olephines, prior art knows catalysts with high activity which have been manufactured of an aluminium alkyl compound, of an electron donor and of a halogenated titanium compound on a carrier substance comprising various magnesium compounds. For magnesium compound usually chlorinated magnesium compounds have been used, which may be for instance water-free magnesium chloride alone or together with other magnesium compounds, or an organic magnesium compound which has been prepared by halogenating organic magnesium compounds with the aid of compounds containing chlorine.

In polymerizing catalysts of this type, the properties of the solid carrier component have a significant influence on the properties of the ultimate catalyst, for instance on its activity. These properties can be substantially influenced through the mode of manufacturing the carrier component.

The present invention concerns catalyst components in which the carrier component has been prepared from compounds containing magnesium which may be natural minerals or synthetic minerals. There is nothing novel in itself in the use of magnesium minerals for starting material in preparing inert carrier components for Ziegler-Natta catalysts to the purpose of polymerizing olephines.

It has turned out to be difficult to manufacture, from various magnesium compounds and from minerals containing them, active Ziegler-Natta catalysts, in particular those for the polymerizing processes of propylene, because in these processes the catalysts are highly sensitive to moisture and to the crystal water contained in the carrier. Minimal quantities of crystal water already reduce the activity of the catalyst significantly.

The present invention relates to catalyst components for those alpha olephine-polymerizing catalysts which consist of an organoaluminium compound, an external electron donor and a solid catalyst component which has been obtained when a solid carrier component containing magnesium has reacted with a titanium halogen compound and which are free of the drawbacks mentioned and, therefore, are fit to be used in polymerizing propylene.

The catalyst component of the invention is characterized in that it has been composed by making a solid carrier component, which has been prepared

(a) by dissolving in hydrochloric acid a magnesium compound selected from the group: hydroxide, carbonate and oxide, and natural minerals and synthetic minerals containing these;

(b) by evaporating the solution until dry;

(c) by heating the obtained salt mixture at 130 to 150°C;

(d) by dissolving the magnesium component in ethanol;

(e) by drying the ethanol solution of the magnesium component with the aid of periodic azeotropic distillation; and

(f) by precipitating the solid carrier component from the ethanol solution

react with a titanium halogen compound in the presence of an internal electron donor or without electron donor.

The invention also concerns a procedure for manufacturing catalyst components for alpha olephine-polymerizing catalysts which consist of an organoaluminium compound, an external electron donor and a solid catalyst component containing magnesium which has been obtained when a solid carrier component containing magnesium has reacted with a titanium halogen compound. The procedure of the invention is characterized in that said catalyst component is produced by making a solid carrier component which has been prepared

(a) by dissolving in hydrochloric acid a magnesium compound selected from the following group: hydroxide, carbonate and oxide, as well as the natural mineral and synthetic minerals containing these;

(b) by evaporating the solution until dry;

(c) by heating the obtained salt mixture at 130 to 150°C;

(d) by dissolving the magnesium component in ethanol;

(e) by drying the ethanol solution of the magnesium component with the aid of periodic azeotropic distillation; and

(f) by precipitating the solid carrier component from the ethanol solution

react with a titanium halogen compound in the presence of an internal electron donor or without electron donor.

The catalyst component of the invention and the carrier component used therein afford several advantages over carrier components containing magnesium which have been prepared by conventional synthesis techniques. For instance, in manufacturing the carrier component it is possible to use an open reaction vessel, and because the synthesis is not sensitive to oxygen and moisture an inert nitrogen atmosphere is not absolutely indispensable in the synthesis. In comparison with carriers which have been prepared by halogenating an organic carrier component containing magnesium, the carrier component of the invention is easier and less expensive to manufacture. Hydrochloric acid is the least expensive choice of chlorinating agent, and in the manufacturing process conventional aqueous solutions of hydrochloric acid may be used since the crystal water can be removed quite simply. Moreover, in manufacturing the carrier component, hydrochloric acid may be used in excess since the hydrochloric acid is easy to remove in the following synthesis step. One more advantage of the catalyst component and procedure of the invention is that any magnesium products which may be produced as byproducts, such as MgOHCl, which impair the properties of the catalyst, escape efficiently from the catalyst component of the invention.

Apart from pure magnesium compounds, also mixed salts may be used, as taught by the invention. Generally, the magnesium compounds used as taught by the invention may be presented by the formula $(MgCO_3)_x(Mg(OH)_2)_y(H_2O)_z$, where x and y = 0-10 and, depending on the values of x and y, z = 0-30. The most common mixed magnesium salt of this type is $4MgCO_3.Mg(OH)_2.2H_2O$.

The first step in preparing the catalyst component of the invention is dissolving the magnesium compound in hydrochloric acid. The magnesium compound may be in powder or granular form, but preferably in aqueous suspension form. Most magnesium compounds may be mixed in water to become a homogenous suspension, and using this kind of suspension is advantageous since it controls the too violent reaction when hydrochloric acid is added. An appropriate quantity of water may be selected between 5 to 100 ml per g of Mg compound.

The hydrochloric acid is advantageously added in the form of concentrated aqueous solution. On addition of hydrochloric acid the magnesium compound is completely dissolved when the pH of the suspension has gone down far enough. Such a quantity of hydrochloric acid is added that pH goes down at least to pH 3, preferably even down to pH 1. If too little hydrochloric acid is added, a great part of the magnesium may remain undissolved.

After the magnesium compound has been dissolved in the hydrochloric acid, the solution is evaporated until dry in the step to follow. At the same time, the excess of hydrochloric acid evaporates. After the evaporation process, the hydrochloric acid mixture is slightly heated at 130-150°C. The heating time required is between 0.5 and 1.5 hrs, most advantageous about 1 h. Too high temperature causes the magnesium component to decompose into magnesium chloride and hydroxide, whereby the yield is lowered.

After heating, the salt mixture is dissolved in ethanol, whereby the magnesium component suited for use as carrier is completely dissolved. The undissolved constituents may be separated by means of centrifuging or filtering from the ethanol solution. Any insoluble magnesium compounds produced in calcination, for instance magnesium chloride, can therefore be separated quite simply.

The obtained clear ethanol solution now contains exclusively magnesium component with crystal water. The removal of the crystal water is indispensable for producing an active catalyst component. As taught by the invention, the crystal water is removed by distilling, with the aid of periodic azeotropic distillation. During this distillation, an azeotropic mixture of alcohol and water escapes from the solution, whereby new crystal water is transferred to the ethanol solution. By adding new water-free ethanol to the solution and by repeated distillation, total removal of crystal water from the magnesium component is accomplished.

The number of azeotropic distilling runs required depends on the amount of water present in the solution and on the intended use of the catalyst. If the catalyst is intended to be used in polymerizing ethylene, fewer runs are needed, for instance 1 to 5 runs. When manufacturing a carrier component for propylene polymerizing, nearly water-free carrier is required, and experience has taught that this is achieved if the number of distilling runs is 8 to 15, advantageously 10 to 12. The water content of the carrier component can then be brought down to 0.3 moles of crystal water, which may be considered the upper limit for propylene-polymerizing catalysts.

After drying out the crystal water, precipitation of the magnesium carrier component is effected by transferring the dried ethanol solution into a cold solvent, whereby the magnesium component will precipitate. Suitable solvents are common organic hydrocarbons used as solvents. Heptane is a highly appropriate solvent for the reason that its boiling point is high enough so that in the titanizing step which has to be carried out subsequently titanium has time to react, and on the other hand it is low enough to avoid melting of the carrier component in the titanizing step.

When the ethanol solution containing magnesium component is added into cold heptane, the carrier component is precipitated in finely divided form. After washing and drying, the carrier component is titanized with the aid of titanium tetrachloride in a manner known in itself in the art, for producing the catalyst component.

Titanizing may be accomplished for instance in that the solid carrier component is mixed with a titanium halogen compound once or several times. Before, during or after the titanizing process the catalyst component may furthermore be treated with the aid of an internal electron donor compound. The titanizing is preferably accomplished in two steps, between which may be added internal electron donor, which is usually an amine, ether or ester of its type. A suitable donor is, for instance, diisobutylphthalate, of which the quantity may be 0.05 to 0.3, most appropriately 0.2, mol/mol Mg.

In the first step a low temperature is to be recommended, e.g. below 0°C, preferably below -20°C. The second titanizing step may be carried out at higher temperature, e.g. at 85 to 110°C, a reaction time of 1-1.5 hours being sufficient. The solid reaction product is then separated from the liquid phase and washed with hydrocarbon solvents to remove impurities and derivatives. The catalyst component may be dried in light vacuum or in nitrogen gas at room temperature, or at slightly elevated temperature, and it may be homogenized by grinding it in a ball mill.

The catalyst component of the invention may then be used to polymerize alpha olephines by allowing it to come into contact with an Al compound and an external compound releasing electrons. In the role of external compounds releasing electrons may be used, for instance, amines, ethers, esters (preferably alkyl and arylesters of aromatic carboxylic acids) or silane compounds (alkyl/aryl silanes), examples of such being, among others, the methyl and ethyl esters of benzoic, toluic and phthalic acid, isobutylesters of phthalic acid, triethoxysilane, etc. Said electron donors are compounds which are able to enter complexes with Al alkyls. The stereo-specificity of the catalyst can be improved with their aid.

The external compound releasing electrons, or donor, and the Al alkyl are mixed together, the molar proportion of the compound releasing electrons to the Al compound being about 20 and the Al/Ti molar proportion being between 10 to 300, depending on the polymerizing system. Polymerizing may be carried out either as slurry or bulk polymerizing, or in the gas phase.

Catalyst components and catalysts prepared as taught by the invention may be used to polymerize alpha olephines, such as ethylene, propylene and butylene, by the slurry, bulk and gas phase methods, but the catalyst components of the invention are particularly well suited for use in polymerizing propylene because in them the quantity of crystal water in the carrier substance is singularly low and, as a result, the activity of the catalysts is particularly high especially regarding polymerizing of propylene.

The invention is more closely illustrated in the following examples.

## EXAMPLE

10 g dolomite ($MgCa(CO_3)_2$) were suspended in 100 ml ethanol and titrated with 17.5 ml conc. hydrochloric acid (38%), whereby the pH of the suspension went down to pH 1 and a solution was produced. The solution was evaporated until dry, and the residue was calcinated for 1 h at 140°C. The salt was poured into 200 ml of ethanol, with mixing. The ethanol solution was centrifuged for 10 min. at 3000 rpm. The clear solution was poured into a three-necked flask (1 litre), in which the drying of the ethanol/carrier component solution was carried out with azeotropic distillation. The drying process consumed 900 ml absolute ethanol (moisture content less than 100 ppm). The distillation took place in a slow nitrogen flow. The dry (moisture content < 400 µg $H_2O/0.1$ ml), hot ethanol/carrier solution was transferred into cold heptane, in which the carrier component crystallized. The carrier component was henceforward treated in inert conditions ($N_2$). The carrier component was transferred into cold titanium tetrachloride (400 ml, -20°C). After the mixture had warmed up to room temperature, 0.2 mol/mol Mg of diisobutylphthalate were added thereto. The mixture was boiled for 4 hours at 110°C, whereafter the catalyst component was allowed to settle, and the $TiCl_4$ solution was exchanged for new solution. The solution was boiled for 1 h at 110°C. The completed catalyst component was washed with heptane and dried with nitrogen. The yield was 1.2 g, and the catalyst contained: Mg 11.5%, Ti 3.4%, and Cl- 59%.

The carrier component prepared in the way just described was applied in propylene polymerizing, adding into a 2-litre polymerizing reactor catalyst which had been prepared by mixing, as alumini um alkyl compound, triethylaluminium and, as Lewis compound, diphenylmethoxysilane (Al donor mole proportion: 20) in 50 ml heptane and admixing to this, after 5 minutes, carrier component so as to make the Al/Ti molar proportion 200. Polymerizing was carried out in conditions as follows: propylene partial pressure 9.0 bar, hydrogen partial pressure 0.3 bar, temperature 70°C, and polymerizing time 3 hrs.

The activity of the catalyst was found to be 3.3 kg PP per g of catalyst in 3 hours.

## EXAMPLE 2

10 g brucite $Mg(OH)_2$ were suspended in 100 ml ethanol, titrated with 20 ml conc. hydrochloric acid (38%), whereby the pH of the suspension went down to pH 1 and a solution was produced. The solution was evaporated until dry, and the residue was calcinated for 1 hr at 140°C. The salt was poured into 200 ml ethanol, with mixing. The ethanol solution was centrifuged for 10 min. at 3000 rpm. The clear solution was poured into a three-necked flask (1 litre), in which the drying of the ethanol/carrier component solution was carried out with the aid of azeotropic distillation. The drying process consumed 1000 ml absolute ethanol (moisture content less than 100 ppm). The distillation took place in a slight nitrogen flow. The dry (moisture content < 400 µg $H_2O/0.1$ ml), not ethanol/carrier component solution was transferred into cold heptane (-20°C), in which the carrier component crystallized. The carrier component was henceforward processed in inert conditions ($N_2$). The carrier component was transferred into cold titanium tetrachloride (400 ml, -20°C). After the mixture had warmed up to room temperature, 0.1 mol/mol Mg of diisobutylphtalate were added. The mixture was boiled for 1 hr at 110°C, whereafter the catalyst was allowed to settle and the $TiCl_4$ solution was exchanged for new solution. The mixture was boiled for 1 hr at 110°C. The completed catalyst component was washed with heptane and dried with nitrogen. The yield was 1.2 g and the catalyst component contained: Mg 11.0%, Ti 3.9% and Cl 60.0%.

When the above-mentioned catalyst was used to polymerize propylene as in Example 1, its activity was found to be 2.1 kg PP per g of catalyst in 3 hours.

## EXAMPLE 3

10 g $Mg(OH)_2$ were suspended in 100 ml water. TYothe suspension, conc. hydrochloric acid (38%) was added until pH was 1. Thereafter, the solution was evaporated until dry, and the dried salt was calcinated slightly for 1 hr at 140°C. The salt was poured, with mixing, into 200 ml ethanol. The ethanol solution was centrifuged for 10 min. at 3000 rpm. The clear solution was poured into a three-necked flask (1 litre), in which the drying of the ethanol/carrier solution was carried out with azeotropic distillation. The drying process consumed 1200 ml absolute ethanol (moisture content < 100 ppm). The distillation took place in a slow nitrogen flow. The dry (moisture content < 400 µg $H_2O/0,1$ ml) hot ethanol/carrier solution was transferred into 500 ml cold heptane, in which the carrier component crystallized. The carrier component was henceforward processed in inert conditions ($N_2$). The carrier component was transferred into 500 ml cold titanium tetrachloride (-20°C). After the mixture had warmed up to room temperature, 0.2 mol/mol Mg of diisobutylphthalate were added. The mixture was boiled for 1 hr at 110°C, whereafter the catalyst component was allowed to settle and the $TiCl_4$ solution was once exchanged for new solution. The mixture was washed for 1 hr at 110°C. The completed catalyst component was washed with heptane and dried with nitrogen. The yield was 6.0 g, and the catalyst component contained: Mg 13.5%, Ti 8.0%, and Cl-53.0%.

The catalyst was used to polymerize propylene as in Example 1, and its activity was 6.5 kg PP per g of catalyst in 3 hours. The bulk density of the polymer was 0.3 g/ml, and 95% of the particle distribution were in the range 0.2 to 1.0 mm.

EXAMPLE 4

The catalyst component was prepared as in Example 3, using 10 g $4MgCO_3.Mg(OH)_2.4H_2O$ for starting material. The yield of the obtained catalyst component was 12.9 g, and it contained: Mg 147%, Ti 5.0%, and Cl- 53.0%. The catalyst component was used for polymerizing propylene as in Example 1, and its activity was 6.8 kg PP per g of catalyst in 3 hours. The bulk density of the polymer was 0.26 g/ml, and 95% of its particle distribution were in the range 0.2 to 1 mm.

EXAMPLE 5

As in Example 3, a catalyst component was prepared using 10 g MgO as starting material. The yield of the obtained catalyst component was 8.4 g, and on polymerizing propylene with it, as in Example 1, its activity was found to be 6.97 kg PP per g of catalyst in 3 hours. The bulk density of the polymer was 0.3 g per ml, and 95% of its particles had a diameter in the range 0.2 to 1 mm.

**Claims**

1. A process for the manufacture of a catalyst component suitable for use in an alpha-olefin polymerization catalyst, which process comprises:
   (a) dissolving in hydrochloric acid a magnesium compound selected from magnesium hydroxide, magnesium carbonate and magnesium oxide, and natural and synthetic minerals containing these;
   (b) evaporating the solution until dry;
   (c) heating the salt mixture obtained at 130 to 150°C;
   (d) dissolving the resultant magnesium component in ethanol;
   (e) drying the ethanolic solution of the magnesium component by periodic azeotropic distillation;
   (f) precipitating a solid carrier component from the ethanolic solution; and
   (g) reacting the solid carrier component with a titanium halogen compound in the presence of an internal electron donor or without an electron donor.

2. A process according to claim 1, characterized in that after evaporating the hydrochloric acid solution, the salt mixture is heated for 0.5 to 2 hours.

3. A process according to claim 1 or claim 2, characterized in that dissolution of the magnesium-containing compound in hydrochloric acid is effected by suspending the compound in water and adding such a quantity of hydrochloric acid to the aqueous suspension that the pH goes down to pH 1-3.

4. A process according to any one of the preceding claims, characterized in that in the drying of the ethanolic solution, 1-15 azeotropic distillation runs are effected.

5. An olefin polymerization catalyst comprising a solid catalyst component obtained by a process as claimed in any one of the preceding claims.

6. A process for the polymerization of an olefin, especially propylene, in which there is employed a catalyst as claimed in claim 5.

**Patentansprüche**

1. Verfahren zur Herstellung einer Katalysatorkomponente, die zur Verwendung in einem Katalysator zur Polymerisation von Alpha-Olefinen geeignet ist, wobei das Verfahren umfasst:
   a) Auflösen einer Magnesiumverbindung in Salzsäure, wobei die Magnesiumverbindung aus Magnesiumhydroxid, Magnesiumcarbonat, Magnesiumoxid und diese enthaltenden natürlichen und synthetischen anorganischen Stoffe ausgewählt ist;
   b) Verdampfen der Lösung bis zum Austrocknen;
   c) Heizen der so erhaltenen Salzmischung auf 130 bis 150°C;
   d) Lösen der resultierenden Magnesiumkomponente in Ethanol:
   e) Trocknen der ethanolischen Lösung der Magnesiumkomponente durch periodische azeotropische Destillation;
   f) Fällen einer Feststoffträgerkomponente aus der ethanolischen Lösung: und
   g) Umsetzen der Feststoffträgerkomponente mit einer Titan-Halogen-Verbindung in Gegenwart eines Donators von internen Elektronen oder ohne Elektronendonator.

2. Verfahren nach Anspruch 1, dadurch gekennzeichnet, dass die Salzmischung nach dem Verdampfen der Salzsäurelösung während 0, 5 bis 2 Stunden geheizt wird.

3. Verfahren nach Anspruch 1 oder 2, dadurch gekennzeichnet, dass das Auflösen der magnesiumhaltigen Verbindung in Salzsäure durch Suspendieren der Verbindung in Wasser und Beigabe einer solchen Menge von Salzsäure zur wässrigen Suspension, dass der pH-Wert auf pH 1-3 sinkt, erfolgt.

4. Verfahren nach einem der vorangehenden Ansprüche, dadurch gekennzeichnet, dass beim Trocknen der ethanolischen Lösung 1-15 Läufe von azeotropischer Destillation durchgeführt werden.

5. Katalysator zur Polymerisation von Olefinen, umfassend eine nach einem Verfahren gemäss einem der vorangehenden Ansprüche erhaltene Feststoffkatalysatorkomponente.

6. Verfahren zur Polymerisation eines Olefins, insbesondere Propylen, bei welchem ein Katalysator gemäss Anspruch 5 verwendet wird.

**Revendications**

1. Un procédé pour la fabrication d'un composant de catalyseur approprié à l'utilisation dans un catalyseur de polymérisation d'$\alpha$-oléfines, lequel procédé comprend:

    a) la dissolution dans l'acide chlorhydrique d'un composé du magnésium choisi parmi l'hydroxyde de magnésium, le carbonate de magnésium et l'oxyde de magnésium et les minéraux naturels et synthétiques les contenant;

    b) l'évaporation à sec de la solution;

    c) le chauffage du mélange de sels obtenu à 130 à 150°C ;

    d) la dissolution du composant au magnésium obtenu dans l'éthanol;

    e) le séchage de la solution éthanolique du composant au magnésium par distillation azéotropique périodique;

    f) la précipitation d'un composant support solide à partir de la solution éthanolique; et

    g) la réaction du composant support solide avec un composé halogéné du titane en présence d'un donneur d'électrons interne ou sans donneur d'électrons.

2. Un procédé selon la revendication 1 caractérisé en ce que, après l'évaporation de la solution dans l'acide chlorhydrique, on chauffe le mélange de sels pendant 0,5 à 2 heures.

3. Un procédé selon la revendication 1 ou la revendication 2, caractérisé en ce que la dissolution du composé contenant du magnésium dans l'acide chlorhydrique est effectuée par mise en suspension du composé dans l'eau et addition à la suspension aqueuse d'une quantité d'acide chlorhydrique telle que le pH s'abaisse à pH 1–3.

4. Un procédé selon l'une quelconque des revendications précédentes, caractérisé en ce que, dans le séchage de la solution éthanolique, on effectue 1 à 15 opérations de distillation azéotropique.

5. Un catalyseur de polymérisation des oléfines comprenant un composant de catalyseur solide obtenu par un procédé selon l'une quelconque des revendications précédentes.

6. Un procédé pour la polymérisation d'une oléfine, en particulier du propylène, dans lequel on utilise un catalyseur selon la revendication 5.